# EUROPÄISCHE PATENTANMELDUNG

(11) **EP 4 403 031 A2**
(43) Veröffentlichungstag der Anmeldung: **24.07.2024**
(21) Anmeldenummer: 24172334.5
(22) Anmeldetag: 22.11.2017
(51) Int. Cl.: A21B 3/13

(54) **FORM ZUR AUFNAHME VON LEBENSMITTELN**

(30) Priorität: 30.11.2016 DE 102016123167
(62) Teilanmeldung aus: 17808763.1
(71) Anmelder: coox GmbH, 42103 Wuppertal (DE)
(72) Erfinder: Scheel, Ralf, 42287 Wuppertal (DE)
(74) Vertreter: Roche, von Westernhagen & Ehresmann

(57) **Zusammenfassung**

Die Erfindung betrifft eine Form (10, 12) zur Aufnahme von Lebensmitteln, insbesondere zum Backen oder Kochen, umfassend mehrere Seitenwände (34a, 34b, 35a, 35b) und einen Boden (33). Die Besonderheit besteht darin, dass die Form aus einer flachliegenden, aus einem hochtemperaturbeständigen, elastischen, flexiblen Silikonkautschuk oder einem anderen Kunststoff bestehenden Matte (11) gebildet ist, die wenigstens einen Bodenabschnitt (13b) und mehrere dazu parallel ausgerichtete Seitenwandabschnitte (13a, 13c, 13k, 13f) umfasst, wobei zwischen dem Bodenabschnitt und jeweils einem Seitenwandabschnitt ein insbesondere linienförmiger Sollbiegebereich (14a, 14b, 15a, 15b) angeordnet ist, entlang dessen der Seitenwandabschnitt (13a, 13c, 13k, 13f) relativ zu dem Bodenabschnitt (13b) biegbar und aus der flachliegenden Ruheposition (Fig. 1) in eine aufrechte Arbeitsposition (Fig. 9) verlagerbar ist, und wobei Formhaltemittel (17a, 17b, 17c, 17d, 17e, 17f, 17g, 17h, 18a, 18b, 18c, 18d) vorgesehen sind, mit denen jeweils ein Seitenwandabschnitt in seiner Arbeitsposition lösbar arretierbar ist.

## Beschreibung

Die Erfindung betrifft eine Form zur Aufnahme von Lebensmitteln gemäß dem Oberbegriff des Anspruches 1.

Formen zur Aufnahme von Lebensmitteln der gattungsgemäßen Art sind seit Jahrhunderten, wenn nicht seit Jahrtausenden, Stand der Technik.

Die Erfindung betrifft insbesondere eine Form die zum Backen und/oder zum Kochen von Lebensmitteln geeignet ist.

Insbesondere sind Backformen bekannt, die handelsüblich auch als Kastenkuchenformen bezeichnet werden. Diese bestehen in der Regel aus beschichteten Blechteilen, die einen formstabilen, quaderförmigen Körper bilden. Nach dem Backen muss zur Entfernung des Kuchens die Form gestürzt werden.

Um ein solches Stürzen zu vermeiden, sind sogenannte Springformen bekannt, jedenfalls für zylindrische Backformen mit kreisförmigem Querschnitt.

Problematisch ist die viel Raum erfordernde Unterbringung dieser Backformen, die zum Teil nur selten gebraucht werden, aber regelmäßig große Küchenschrankvolumina ausfüllen.

In jüngerer Zeit sind darüber hinaus Backformen aus Silikonkautschuk bekannt geworden. Hier handelt es sich um eher geringvolumige Backformen, die auf Grund der flexiblen und elastischen Eigenschaften des Materials eine platzsparende Unterbringung ermöglichen. Die bekannten Silikon-Backformen sind schalenförmig ausgebildet, und können beispielsweise mit dem flüssigen Kuchenteig gefüllt werden. Die Handhabung dieser Backformen kann auf Grund der Flexibilität der Wandbereiche Probleme bereiten.

Ausgehend von dem eingangs geschilderten Stand der Technik liegt die Aufgabe der Erfindung darin, eine Form bereit zu stellen, die mehrere Seitenwände und einen Boden aufweist, und deren Handhabung verbessert ist.

Die Erfindung löst diese Aufgabe mit den Merkmalen des Anspruches 1, insbesondere mit denen des Kennzeichenteils, und ist demgemäß dadurch gekennzeichnet, dass die Form aus einer flachliegenden, aus einem hochtemperaturbeständigen, elastischen, flexiblen Silikonkautschuk oder Kunststoff bestehenden Matte gebildet ist, die wenigstens einen Bodenabschnitt und mehrere dazu parallel ausgerichtete Seitenwandabschnitte umfasst, wobei zwischen dem Bodenabschnitt und jeweils einem Seitenwandabschnitt ein insbesondere linienförmiger Sollbiegebereich angeordnet ist, entlang dessen der Seitenwandabschnitt relativ zu dem Bodenabschnitt biegbar und aus der flachliegenden Ruheposition in eine aufrechte Arbeitsposition verlagerbar ist, und wobei Formhaltemittel vorgesehen sind, mit denen jeweils ein Seitenwandabschnitt in seiner Arbeitsposition lösbar arretierbar ist.

Das wesentliche Prinzip der Erfindung wird wie folgt erläutert:
Es handelt sich um eine Form, in der Lebensmittel aufgenommen werden können. Insbesondere dient die Form zum Backen, insbesondere von Kuchen, aber gleichermaßen auch zum Kochen, beispielsweise das Kochen von Pasteten. Von der Erfindung sind auch Formen umfasst, die der Aufnahme von Gefriergut dienen, um beispielsweise ein Sorbet mittels eines Gefriervorganges zuzubereiten.

Die Form umfasst im montierten Zustand, bzw. bei in Arbeitsposition befindlicher Seitenwände, mehrere Seitenwände, z. B. drei, vier oder fünf Seitenwände, und einen Boden. Die Form weist insoweit einen Hohlraum auf, der mit insbesondere einem flüssigen oder dickflüssigen oder zumindest teilweise flüssigen Gut befüllt werden kann.

Die erfindungsgemäße Form umfasst eine - im nicht montierten Zustand flachliegende - Matte aus einem besonderen Werkstoff. Insbesondere umfasst die erfindungsgemäße Form eine Matte aus einem hochtemperaturbeständigen Silikonkautschuk oder aus einem anderen geeigneten und vergleichbaren Kunststoff. Das Material ist hochtemperaturbeständig ausgebildet, und ist insbesondere dazu geeignet, übliche Backofentemperaturen von zumindest bis zu 250° - auch wiederholt - auszuhalten, ohne dabei seine flexiblen Eigenschaften zu verlieren, oder gar Inhaltsstoffe in das zu backende Lebensmittel unter Temperatureinfluss oder auch bei längerer Aufbewahrungsdauer abzugeben.

Die erfindungsgemäße Form ist wiederverwendbar, insbesondere zahlreiche Male wiederverwendbar.

Der Silikonkautschuk ist elastisch, insbesondere in gewissem Maße rückstellelastisch ausgebildet, und auch flexibel. Das Material kann insoweit z. B. zusammengefaltet oder gedrückt und gerollt werden. In geringem Maße kann das Material auch kompressibel ausgebildet sein.

Die Matte ist im Wesentlichen flachliegend ausgebildet, so dass sämtliche Abschnitte, also sowohl der Bodenabschnitt, als auch die in Ruheposition befindlichen Seitenwandabschnitte und die später noch zu erläuternden Eckabschnitte entlang einer gemeinsamen Ebene ausgerichtet sind. Von der Erfindung ist auch umfasst, wenn einzelne Abschnitte relativ zu anderen Abschnitten geringfügig, beispielsweise in Folge einer dauerhaften und häufigen Verwendung, nur im Wesentlichen entlang einer Ebene ausgerichtet sind, oder auch Wellen, Beulen oder dergleichen bilden oder aufweisen.

Gemäß der Erfindung ist beispielsweise vorgesehen, dass die Matte einen Bodenabschnitt und vier Seitenwandabschnitte aufweist. Soll die Form einen im Wesentlichen quaderförmigen Hohlraum mit langen Seitenwänden und kurzen Querseitenwänden ausbilden, weist die Matte einen Bodenabschnitt mit zwei Längsseitenwandabschnitten und zwei Querseiten- oder Breitseitenwandabschnitten auf.

Gemäß der Erfindung ist jeweils zwischen dem Bodenabschnitt und einem Seitenwandabschnitt ein Sollbiegebereich angeordnet. Der Sollbiegebereich ist insbesondere linienförmig ausgebildet, und weiter insbesondere entlang einer Geraden ausgebildet. Er kann beispielsweise durch eine Materialschwächung erreicht werden.

Beispielsweise kann gemäß der Erfindung vorgesehen sein, dass die Matte insgesamt eine konstante Wandstärke oder eine im Wesentlichen konstante Wandstärke aufweist, von beispielsweise zwischen 1mm und 10mm.

Im Bereich der Sollbiegestellen kann die Wandstärke gegenüber den übrigen Abschnitten der Matte kleiner ausgebildet sein.

Von der Erfindung sind beispielsweise auch Ausführungen umfasst, bei denen die Wandstärke der Matte durchgehend etwa 2mm bis 4mm beträgt, und im Bereich der Sollbiegebereiche auf Wandstärken zwischen 0,5mm und 1,5mm reduziert ist.

Dies ermöglicht einerseits ein einfaches optisches Erkennen der Sollbiegebereiche für die Bedienperson, weil sich die Bereiche mit reduzierter Wandstärke, beispielsweise auch auf Grund von Konturierungen oder Kanten gegenüber den übrigen Abschnitten optisch abzeichnen. So wird dem Benutzer eine intuitive Anleitung zur Verfügung gestellt, entlang welcher Sollbiegebereiche eine Verlagerung eines Abschnittes relativ zu einem anderen Abschnitt durchgeführt werden soll.

Zum anderen wird der Biegevorgang selbst erheblich erleichtert.

Jeder Seitenwandabschnitt ist entlang des jeweiligen Sollbiegebereiches relativ zu dem Bodenabschnitt biegbar. Jeder Seitenwandabschnitt ist insoweit aus einer flachliegenden Ruheposition in eine aufrechte oder im Wesentlichen aufrechte, insbesondere um etwa 90° zu dem Bodenabschnitt abgewinkelte, Arbeitsposition verlagerbar.

In der Arbeitsposition kann der Seitenwandabschnitt unter Zuhilfenahme von Formhaltemitteln lösbar arretiert werden, insbesondere relativ zu den benachbarten Seitenwandabschnitten. Es kann insoweit durch Überführung der umgebogenen Seitenwandabschnitte aus einer flachliegenden Matte in einen aufrechten Zustand und mittels deren Arretierung eine Raumform erreicht werden, die beispielsweise einer herkömmlichen Kastenkuchenform entspricht.

Die Form wird dabei solange beibehalten, wie dies von der Bedienperson gewünscht ist.

Ist der Kuchen fertig gebacken - oder der Backvorgang oder der Kochvorgang beendet -, können die Formhaltemittel gelöst werden, und die Matte kann in ihren ursprünglichen, flachliegenden Zustand rücküberführt werden.

Der Kuchen kann sodann ohne weiteres entformt werden, und zwar auf die Weise, dass die Seitenwandabschnitte (nämlich insbesondere sämtliche Seitenwandabschnitte) vom Kuchen weggeklappt und in ihre ebene Ruheposition rücküberführt werden. Der Kuchen ist dann von allen fünf Seiten her frei zugänglich. Er kann beispielsweise auch unmittelbar, auf der Matte liegend, glasiert werden, dort geschnitten werden, oder auf einfache Weise von der Matte entnommen werden.

Die gleichen Vorteile bieten sich auch bei anderen, zu backenden oder zu kochenden Speisen, wie beispielsweise Pasteten oder einem gefrorenen Sorbet: Ein Lösen durch Stürzen der Form ist nicht erforderlich, da bei der erfindungsgemäßen Form die Seitenwände nach Beendigung des Backvorganges weggeklappt werden können.

Nach Beendigung des Back- oder Kochvorganges kann die Matte auf einfache Weise gereinigt werden. Mangels verbleibender Ecken - wie bei herkömmlichen metallischen Kastenkuchenformen üblich - ist die Reinigung auch besonders einfach und mühelos durchführbar.

Schließlich kommt es auch bei der erfindungsgemäßen Form in Betracht, die Matte zu Reinigungszwecken in eine Spülmaschine zu geben. Auf Grund der flexiblen Form ist dies auch platzsparend und unproblematisch möglich.

Nach Beendigung des Reinigungsvorganges kann die Matte platzsparend dauerhaft aufbewahrt werden. Sie kann hierzu z. B. gerollt oder gefaltet oder beliebig verformt werden, und nimmt für die Unterbringung nur sehr wenig Platz in Anspruch.

Gemäß einer vorteilhaften Ausgestaltung der Erfindung ist die Matte im Wesentlichen rechteckig ausgebildet. Dies erlaubt auf einfachste Weise die Bereitstellung von Formen mit quaderförmigen Hohlräumen.

Gemäß einer weiteren vorteilhaften Ausgestaltung der Erfindung sind die Sollbiegebereiche durch Zonen mit Materialschwächungen erreicht. Dies ermöglicht eine besonders einfache Herstellung der Sollbiegebereiche.

Gemäß einer weiteren vorteilhaften Ausgestaltung der Erfindung weist die Matte vier Seitenwandabschnitte auf, die in ihrer aufrechten Arbeitsposition zwei Längsseitenwände und zwei Querseitenwände ausbilden. Hierdurch kann auf denkbar einfache Weise eine Backform nach Art einer Kastenkuchenform bereitgestellt werden.

Gemäß einer weiteren vorteilhaften Ausgestaltung der Erfindung weist die Matte an ihren äußeren Ecken Eckabschnitte auf, die jeweils zwei Seitenwandabschnitte miteinander verbinden. Jeder Eckabschnitt kann insbesondere von zwei im Wesentlichen dreieckförmigen Teilabschnitten bereitgestellt sein. Die Eckabschnitte ermöglichen auf besonders vorteilhafte Weise die Anordnung der Formhaltemittel, zumindest Einiger der Formhaltemittel. Insbesondere kann durch eine entsprechend optimierte Anordnung der Eckabschnitte und eine Ermöglichung eines Faltvorganges auch der Eckabschnitte eine flüssigkeitsdichte Verbindung zwischen zwei benachbarten, in Arbeitsposition befindlichen Seitenwandabschnitten erreicht werden.

Gemäß einer weiteren vorteilhaften Ausgestaltung der Erfindung weisen auch die Eckabschnitte Sollbiegebereiche auf. Insbesondere können die Sollbiegebereiche entlang von Geraden ausgerichtet sein, die den Eckabschnitt in zwei etwa gleich große, insbesondere im Wesentlichen dreieckförmige Teilabschnitte unterteilen.

Gemäß einer weiteren vorteilhaften Ausgestaltung der Erfindung sind die Formhaltemittel an der Matte befestigt. Dies ermöglicht die Bereitstellung einer Form, ohne dass zusätzliche gesonderte Elemente zur Erreichung einer Formwahrung erforderlich sind.

Gemäß einer weiteren vorteilhaften Ausgestaltung der Erfindung umfassen die Formhaltemittel jeweils einen Stecker oder einen Fortsatz und eine Aufnahme oder mehrere Aufnahmen.

Von der Erfindung sind insbesondere Formhaltemittel umfasst, die materialeinheitlich, d. h. insbesondere einstückig-stoffschlüssig, mit der Matte verbunden sind. Die Formhaltemittel können beispielsweise Stecker umfassen, die zu ihrem freien Ende hin verbreitert, insbesondere pilzkopfartig verbreitert sind. Diese Stecker können mit Aufnahmen kooperieren. Beispielsweise kann ein Stecker an einem Eckabschnitt angeordnet sein, und mit einer ersten Aufnahme kooperieren, die ebenfalls an dem Eckabschnitt angeordnet ist, und mit einer zweiten Aufnahme, die an einem Seitenwandabschnitt angeordnet ist. Dabei kann weiter insbesondere an dem Stecker eine Haltefläche und an der zweiten Aufnahme eine Gegenhaltefläche angeordnet sein. Der Stecker kann in montiertem Zustand die beiden Aufnahmen gemeinsam durchgreifen. Die Aufnahmen können insbesondere als Randausnehmungen an der Matte ausgebildet sein.

Gemäß einer weiteren vorteilhaften Ausgestaltung der Erfindung weist die Matte im Bereich der Seitenwandabschnitte Versteifungselemente auf. Beispielsweise können die Versteifungselemente aus härterem, insbesondere biegesteifen Material, wie beispielsweise Metall, gebildeten Laschen bereitgestellt sein. Diese können insbesondere beidseitig von dem Silikonkautschuk oder dem Kunststoffmaterial umhüllt sein, und sozusagen in das Material der Matte eingebettet, bzw. von diesem umspritzt sein.

Weitere Vorteile der Erfindung ergeben sich anhand der nicht zitierten Unteransprüche und aus der nachfolgenden Beschreibung der in den Figuren dargestellten Ausführungsbeispiele. In den Figuren zeigen:
- Fig. 1: in einer teilgeschnittenen, schematischen Draufsicht ein erstes Ausführungsbeispiel einer erfindungsgemäßen Form im flachliegenden Zustand als Matte,
- Fig. 2: in einer teilgeschnittenen schematischen Ansicht einen Bereich der Form der Figur 1 mit einem von einem Stecker oder einem Fortsatz bereitgestellten Formhaltemittel, etwa entlang des Ansichtspfeils II in Figur 1,
- Fig. 3: eine schematische Ansicht eines Teils eines Eckabschnittes der Matte der Figur 1, etwa entlang Ansichtspfeil III in Figur 1, unter Darstellung einer nutförmigen Randausnehmung,
- Fig. 4: in einer schematischen Ansicht gemäß Ansichtspfeil IV in Figur 1 einen - nicht maßstäblich dargestellten - Bereich der Matte der Figur 1, mit einer Aufnahme mit konischen Seitenwänden,
- Fig. 5: in einer teilgeschnittenen, schematischen Ansicht entlang Schnittlinie V-V in Figur 1 einen Schnitt durch die Form der Figur 1, quer zu einer Sollbiegelinie, unter Veranschaulichung eines Bereiches reduzierter Wandstärke,
- Fig. 6: in einer teilgeschnittenen, schematischen Ansicht einen Bereich der Form der Figur 1, etwa entlang Schnittlinie VI-VI, unter Darstellung des Versteifungselementes,
- Fig. 7: in einer perspektivischen, schematischen, vereinfachten Ansicht, die Form der Figur 1 mit in aufrechter Arbeitsposition befindlicher erster Seitenwand und einer in einem Momentzustand, während der Überführung aus der Ruheposition in ihre Arbeitsposition befindlichen gegenüberliegenden Seitenwand,
- Fig. 8: die Form der Figur 7 mit in aufrechter Arbeitsposition befindlichen sämtlichen vier Seitenwänden,
- Fig. 9: die Form der Figur 8 mit um ihre vertikalen Achsen verlagerten Eckabschnitten,
- Fig. 10: in einer schematischen, teilgeschnittenen Ansicht die in Verriegelungsposition befindlichen Formmittel der Form, etwa entlang Ansichtspfeil X in Figur 9, und
- Fig. 11: in einer Darstellung gemäß Figur 1 eine Form mit geänderten Längen- und Breitenabmessungen.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

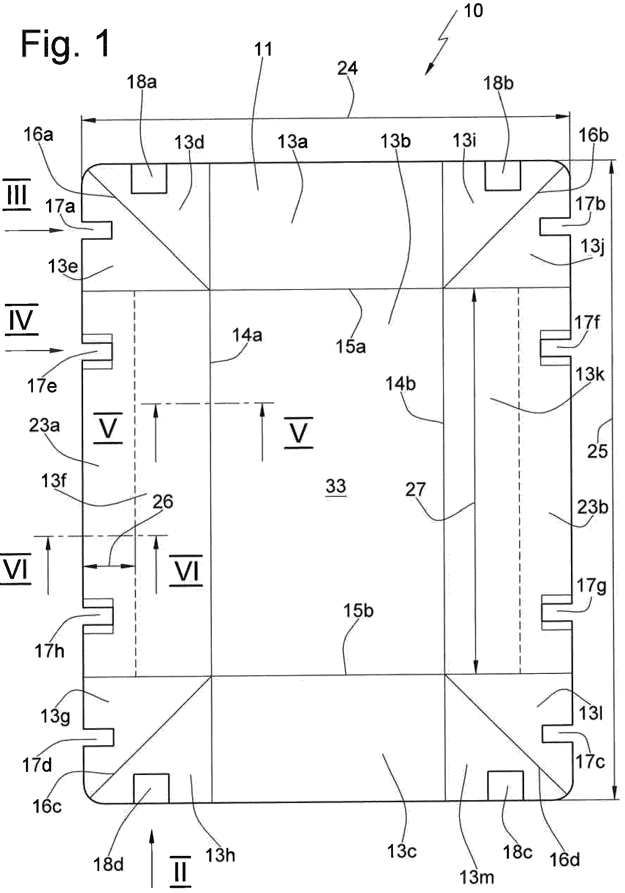

Die in den Figuren in ihrer Gesamtheit mit 10 bezeichnete Form soll zunächst anhand der Darstellung der Figur 1 erläutert werden:
Man erkennt in Figur 1 eine flachliegende Matte 11, die auch als flachliegender Zuschnitt bezeichnet wird.

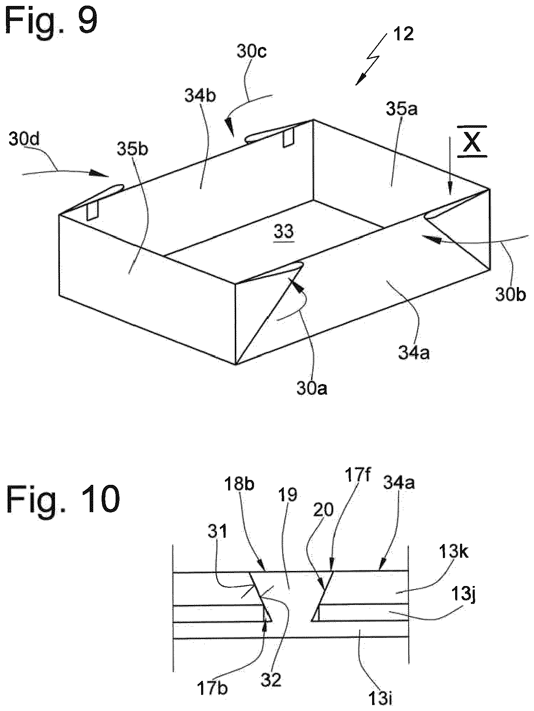

Aus dieser lässt sich, wie später noch im Einzelnen erläutert werden wird, eine Kastenform 12 gemäß der Darstellung der Figur 9 errichten.

Ausweislich der Figur 1 weist die Matte 11 eine Vielzahl von Abschnitten 13 auf.

Im Einzelnen umfasst die Matte 11 zunächst einen Abschnitt 13b, der dazu ausgebildet ist, für die Kastenform 12 eine Bodenwand 33 bereitzustellen.

Des Weiteren umfasst die Matte 11 zwei Seitenwandabschnitte 13k und 13f, die in ihrer Arbeitsposition Längsseitenwände 34a und 34b gemäß Figur 9 bereitstellen.

Weiter umfasst die Matte 11 gemäß Figur 1 Seitenwandabschnitte 13a und 13c, die im aufrechten Zustand Querseitenwände 35a, 35b bereitstellen. Die Querseitenwände 35a, 35b können auch als Breitseitenwände bezeichnet werden.

Schließlich umfasst die Matte 11 noch eine Vielzahl von Eckabschnitten: So umfasst die Matte 11 Eckabschnitte 13i und 13j, die jeweils im Wesentlichen dreieckförmig ausgebildet sind, und die die Seitenwandabschnitte 13a und 13k miteinander verbinden.

Auch umfasst die Matte 11 Eckabschnitte 131 und 13m, die die Seitenwandabschnitte 13k und 13c miteinander verbinden, sowie Eckabschnitte 13h und 13g, die die Seitenwandabschnitte 13c und 13f miteinander verbinden, sowie schließlich Eckabschnitte 13d und 13e, die die Seitenwandabschnitte 13f und 13a miteinander verbinden.

Die Matte 11 weist im Wesentlichen eine konstante Wandstärke 21 auf.

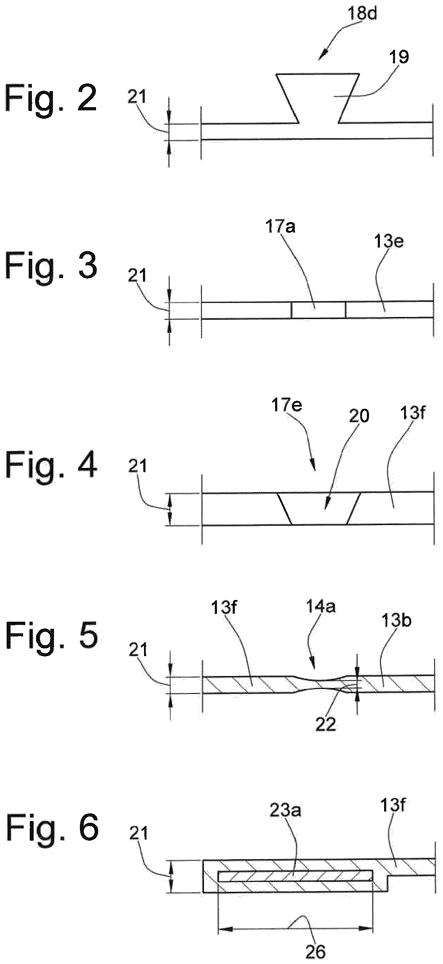

Wie sich insbesondere aus der Schnittdarstellung der Figur 5 ergibt, sind im Bereich der Sollbiegestellen 14, 15, 16 allerdings Abschnitte mit reduzierter Wandstärke 22 vorgesehen (vgl. Figur 5).

Diese Sollbiegelinien oder Sollbiegebereiche 14, 15, 16 sind in Figur 1 mit durchgezogenen Linien darstellt: So ist ein erster, entlang einer Geraden ausgebildeter Sollbiegebereich 14a in vertikaler Richtung, bezogen auf Figur 1, und ein zweiter, parallel dazu ausgerichteter Sollbiegebereich 14b in Figur 1 dargestellt.

Der Sollbiegebereich 14a trennt den Seitenwandabschnitt 13f von dem Bodenabschnitt 33.

Gleichermaßen trennt der Sollbiegebereich 14b den Seitenwandabschnitt 13k von dem Bodenabschnitt 33.

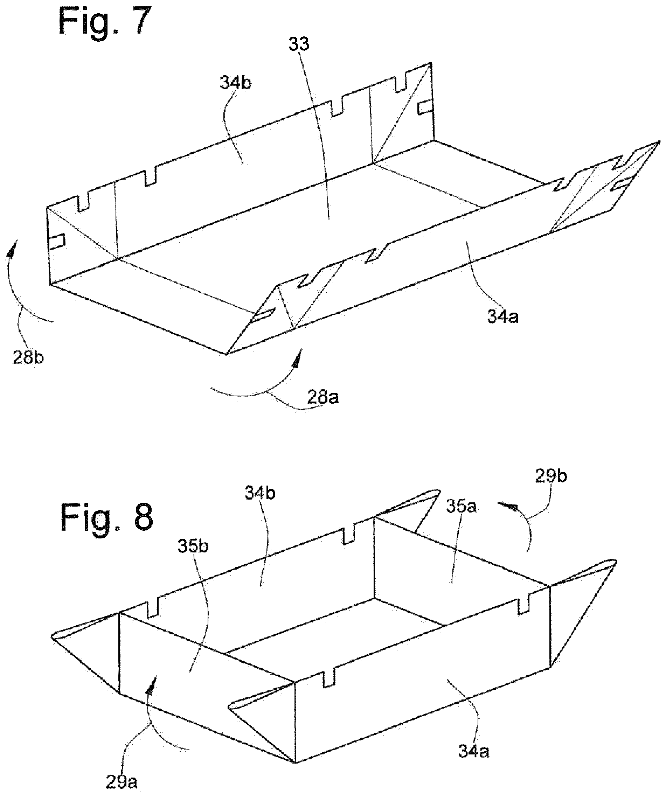

In Folge der Durchführung eines Umbiegevorganges kann der entsprechende Seitenwandabschnitt 13k, 13f durch eine Biegung um die jeweilige Sollbiegestelle 14a, 14b aus der in Figur 1 dargestellten flachliegenden Position, der sogenannten Ruheposition, wie dies Figur 7 durch die Biegerichtungspfeile 28a und 28b andeutet, in ihre aufrechte Position, der sogenannten Arbeitsposition, verlagert werden, und auf diese Weise Seitenwände 34a und 34b ausbilden.

Ausweislich Figur 1 weist die Matte 11 darüber hinaus - bezogen auf Figur 1 horizontal verlaufende - Sollbiegebereiche 15a, 15b auf. Der Sollbiegebereich 15a trennt den Seitenwandabschnitt 13a von dem Bodenwandabschnitt 33 und der Sollbiegebereich 15b trennt den Seitenwandabschnitt 13c von dem Bodenabschnitt 33.

Die beiden Seitenwandabschnitte 13c und 13a können, wie dies Figur 8 durch die Biegerichtungspfeile 29a und 29b andeutet, gleichermaßen auf diese Weise besonders einfach aus der flachliegenden Ruheposition gemäß Figur 1 in ihre aufrechte Arbeitsposition gemäß Figur 8 verlagert werden und in ihrer Arbeitsposition Seitenwände 35a und 35b ausbilden.

Der selbige Sollbiegebereich 14a trennt darüber hinaus den Eckabschnitt 13d von dem Seitenwandabschnitt 13a. Gleichermaßen trennt der Sollbiegebereich 15a auch den Eckabschnitt 13e von dem Seitenwandabschnitt 13f.

Schließlich sind die beiden Eckabschnitte 13e und 13d voneinander noch durch einen diagonal verlaufenden Sollbiegebereich 16a voneinander getrennt.

Die Ausbildung der übrigen drei Eckbereichen ist gleichermaßen getroffen.

Die diagonal verlaufenden Sollbiegebereiche 16a, 16b, 16c, 16d ermöglichen, wie dies Figur 8 zeigt, dass jeweils zwei einander benachbarte dreieckförmige Eckabschnitte aufeinander zu gefaltet werden können.

Figur 8 zeigt eine Situation, in der diese gefalteten, und jeweils zu einer dreieckförmigen Gesamtform gefalteten Eckabschnitte, zipfelartig von der Form 12 in Richtung der Längsachsen nach außen vorstehen.

Auf Grund der Anordnung der Sollbiegebereiche 14a, 14b, 15a, 15b können, ausgehend von der Position gemäß Figur 8, diese Eckabschnitte nun um eine - bezogen auf Figur 9 jeweils im Wesentlichen vertikal ausgerichtete - Biegeachse umgeklappt werden, und zwar derart, dass diese auf die jeweilige Längsseitenwand 34a, 34b hin zugeklappt werden.

Im Folgenden soll die Arretierung der Seitenwände in ihrer Arbeitsposition und deren Lösung erläutert werden:
Ausweislich Figur 1 ist im Bereich des Eckabschnittes 13e eine Randausnehmung 17a in Form einer Aufnahmenut vorgesehen.

Eine weitere Aufnahme 17e ist an dem benachbarten Seitenwandabschnitt 13f vorgesehen.

Die Aufnahmenut 17a ist, wie sich beispielsweise aus Figur 3 ergibt, als eine Durchgangsnut ausgebildet.

Die Aufnahme 17e ist hingegen, wie sich aus der Darstellung der Figur 4 ergibt, als konische Aufnahme 20 ausgebildet, d. h. als eine Aufnahmenut mit konisch zulaufenden Seitenwänden.

An dem Eckabschnitt 13d ist ein Verriegelungselement 18a angeordnet, das ein Formhaltemittel im Sinne der Erfindung ausbildet. Figur 2 zeigt dieses Formhaltemittel in Ansicht: Es wird deutlich, dass das Formhaltemittel einen Verriegelungsfortsatz 19 umfasst, mit einem im Wesentlichen trapezförmigen, sich zu seinem freien Ende hin verbreiternden Querschnitt.

Der Verriegelungsfortsatz weist eine axiale Länge - also bezogen auf Figur 1 in Vertikalrichtung - auf, die der axialen Länge der beiden Nuten 17a und 17e - gemessen in Figur 1 in Horizontalrichtung - entspricht. Darüber hinaus ist die Trapezform des Verriegelungsfortsatzes 19 an den konusförmigen trapezartigen Querschnitt der konischen Aufnahme 20 angepasst.

Bezogen auf die Darstellung der Figur 9 ist ein Zustand erreicht, in dem das jeweilige Verriegelungselement 18a, 18b, 18c, 18d in Flucht zu den zugehörigen Aufnahmenuten 17a, 17b, 17c, 17d, 17e, 17f, 17g, 17h gebracht ist.

Auf Grund der Flexibilität des Materials kann das jeweilige Verriegelungselement 18a, 18b, 18c, 18d durch eine Axialbewegung - also eine Bewegung quer zur Papierebene der Figur 10 - in die beiden zugehörigen Aufnahmenuten 17a, 17b, 17c, 17d, 17e, 17f, 17g, 17h eingesetzt werden.

Figur 10 zeigt in Draufsicht diesen Verriegelungszustand: Das Verriegelungselement 18b sitzt mit seinem Verriegelungsfortsatz 19 und seinen Anlageflächen 31 in unmittelbarem satten Kontakt an den Gegenanlageflächen 32 der konischen Aufnahme 20. Es wird daher durch einen Formschluss zwischen dem Abschnitt 13k und dem Abschnitt 13j unter Vermittlung des Verriegelungselementes 18b ein Aneinanderhalten dieser beiden Abschnitte erreicht.

Da der Abschnitt 13j unmittelbar an dem Abschnitt 13i festgelegt ist, wird unter Vermittlung des Verriegelungselementes 18b jeweils eine unmittelbare, formschlüssige Verbindung zwischen zwei einander benachbarten Seitenwänden 35a, 34a erreicht.

Die in zusammengefalteten Zustand zwischen den beiden Abschnitten 13i und 13k befindliche Aufnahmenut 17b wird von dem jeweiligen Verriegelungselement 18b durchgriffen.

Bemerkenswert ist, dass die beiden, jeweils zu einem dreieckförmigen Abschnitt aufeinander zugefalteten Seitenwandabschnitte 13i und 13j eine taschenartige Überlappung bilden, die zu einem vollständig flüssigkeitsdichten Innenraum der Kastenform 12 führt. Es können also flüssige Lebensmittel, z. B. auch flüssiger Kuchenteig, eingefüllt werden, ohne dass die Gefahr besteht, dass Flüssigkeit aus der Form 10 austritt.

Nach dem Backen des Kuchens oder nach Beendigung des Back- oder Kochvorganges kann das jeweilige Verriegelungselement 18a, 18b, 18c, 18d in geometrisch invertierter Weise aus den beiden Aufnahmenuten 17 heraus gelöst werden, und die Form wieder in einen flachliegenden Zustand überführt werden.

Der fertig gebackene Kuchen ist dann von der Oberseite her, aber auch von allen vier Seitenflächen her, frei zugänglich. Er kann beispielsweise unmittelbar auf der flach liegenden Matte 11 glasiert werden, oder geschnitten werden, oder entnommen werden. Die Matte 11 kann sodann einfach gereinigt werden.

Ausweislich der Figuren 1, 11 und 6 ist deutlich, dass im Bereich der Seitenwandabschnitte 13f und 13k Verstärkungseinlagen 23a, 23b vorgesehen sein können. Diese können beispielsweise eine Breite 26 und eine Länge 27 aufweisen. Insbesondere können die Verstärkungseinlagen aus Metall gebildet sein.

Die Länge 27 der Verstärkungseinlagen kann der entsprechenden Länge des Seitenwandabschnittes 13k entsprechen.

Aus Figur 6 ist ersichtlich, dass die Verstärkungseinlagen allseitig von Kunststoff, bzw. Silikonmaterial umhüllt oder umspritzt sein können. Die Verstärkungseinlagen erhöhen die Formsteifigkeit der Form 10 im montierten Zustand.

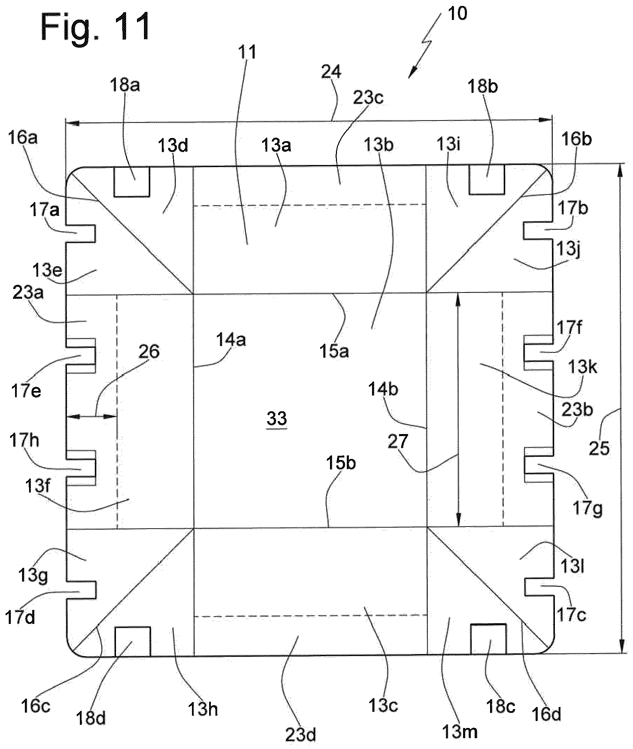

Der Zuschnitt 11 der Figur 1 weist eine Länge 25 und eine Breite 24 auf. Bei einer alternativen Ausgestaltung der Erfindung gemäß Figur 11 sind die Länge 25 und die Breite 24 gleich ausgebildet, so dass sich eine im Wesentlichen quadratische Matte 11 ergibt.

Die Zahl der Verstärkungselemente ist beliebig: So weist die Matte 11 der Figur 11 insgesamt vier Verstärkungselemente 23a, 23b, 23c, 23d auf.

Die Erfindung bezieht sich auch auf nicht dargestellte Formen, die statt einer rechteckigen Matte 11 dreieckförmige oder polygonale Querschnitte aufweisen, oder die gekrümmte Abschnitte aufweisen.

Gleichermaßen ist von der Erfindung umfasst, wenn die Matte 11 eine Oberflächenstruktur aufweist, die eine Struktur aufweist, und hierdurch eine gewisse Prägung ermöglicht, um beispielsweise Konturen oder Figuren in das Backgut einzuprägen.

Als Material für die Form 12 kommen unterschiedliche geeignete Kunststoffe, insbesondere Silikonkautschuk oder andere gummielastische Massen in Betracht. Insbesondere kann hier auf Materialien zugegriffen werden, die für Backformen in herkömmlicher Weise schon verwendet werden, und die für das Backen oder Kochen von Lebensmitteln und den Anforderungen empfohlen oder gesetzlich zugelassen sind.

Der Vollständigkeit halber sei angemerkt, dass weitere, in den Figuren nicht dargestellte Ausführungsformen der Erfindung Formhaltemittel umfassen, die nicht - wie bei den in den Figuren dargestellten Ausführungsbeispielen - stoffschlüssig, einstückig mit der Matte 11 verbunden sind, sondern von der Matte lösbar sind. So kommen beispielsweise ringförmige oder spangenförmige Elemente aus Gummi, Metall oder anderen geeigneten Werkstoffen in Betracht, die dafür sorgen, dass die Seitenwände relativ zu der Bodenfläche 33 in ihrer aufrechten Arbeitsposition während des Back- oder Kochvorganges verbleiben.

Des Weiteren sei darauf hingewiesen, dass das Ausführungsbeispiel der Figuren 1 bis 10 und das Ausführungsbeispiel der Figur 11 jeweils nur eine konkrete Kastenform in Form eines Quaders vorgibt, mit einer konkreten vorgegebenen Abmessung.

Denkbar und von der Erfindung umfasst ist aber auch, dass es ein Ausführungsbeispiel der Erfindung, ausgehend von einer Matte 11, auf Grund des Vorhandenseins einer Mehrzahl von Gruppen von Sollbiegebereichen ermöglicht, dass die Matte 11 nach dem Umbiegen der entsprechenden Seitenwandbereich nach Wahl des Benutzers eine erste oder eine zweite, von der ersten unterschiedliche Raumform einnehmen kann.

So ist beispielsweise denkbar, dass je nach Wunsch der Bedienperson, Quader mit unterschiedlichen Höhen dadurch erreicht werden, dass unterschiedliche Seitenwandabschnitte umgefaltet und in unterschiedliche Raumformen überführt werden.

Des Weiteren soll an dieser Stelle darauf hingewiesen werden, dass neben den Ausführungsbeispielen der Zeichnungen, also den dargestellten quaderförmigen Hohlräumen, auch andere Raumformen, z. B. kreiszylindrische Hohlräume, oder Aufnahmeräume für Lebensmittel mit einem beispielsweise polygonalen Querschnitt bereitgestellt werden können.

Es kommt auch in Betracht, gekrümmte Wandflächenabschnitte vorzusehen, um beispielsweise figürliche Darstellungen zu bilden.

Entscheidend ist, dass die erfindungsgemäße Form 10 von einem flachliegenden Zuschnitt 11 oder einer Matte 11 durch Falt- oder Biegevorgänge bereitgestellt werden kann, wobei die hochgeklappten Seitenwände für die Dauer des Back- oder Kochvorganges in ihrer aufrechten Arbeitsposition fixiert werden können, und nach dem Back- oder Kochvorgang die Form wieder in ihren flachliegenden Ausgangszustand rücküberführt werden kann.

An Stelle der beschriebenen Formhaltemittel, die einen steckerartigen Fortsatz 19 und Nuten 17 in Form von Randausnehmungen vorsehen, umfasst die Erfindung insbesondere auch Formhaltemittel, die einstückig-stoffschlüssig fest mit der Matte 11 verbunden sind, und nach Art von Druckknöpfen fungieren, und durch Durchbrüche in den entsprechenden Wandungsbereichen der Seitenwände hindurch gesteckt werden.

Die bei dem Ausführungsbeispiel dargestellten Formhaltemittel 19, 20 bieten aber den Vorteil, dass in verriegeltem Zustand die Innenseite der Verriegelungsfortsätze 19 bündig zu den Innenseiten der Seitenflächen 34a, 34b angeordnet sind. So ist eine formschöne, kontinuierlich durchgehende, glatte Fläche des zu backenden Gutes, wie Kuchen oder Brot, erreicht.

## Patentansprüche

1. Form (10, 12) zur Aufnahme von Lebensmitteln, insbesondere zum Backen oder Kochen, umfassend mehrere Seitenwände (34a, 34b, 35a, 35b) und einen Boden (33), **dadurch gekennzeichnet, dass** die Form aus einer flachliegenden, aus einem hochtemperaturbeständigen, elastischen, flexiblen Silikonkautschuk oder einem anderen Kunststoff bestehenden Matte (11) gebildet ist, die wenigstens einen Bodenabschnitt (13b) und mehrere dazu parallel ausgerichtete Seitenwandabschnitte (13a, 13c, 13k, 13f) umfasst, wobei zwischen dem Bodenabschnitt und jeweils einem Seitenwandabschnitt ein insbesondere linienförmiger Sollbiegebereich (14a, 14b, 15a, 15b) angeordnet ist, entlang dessen der Seitenwandabschnitt (13a, 13c, 13k, 13f) relativ zu dem Bodenabschnitt (13b) biegbar und aus der flachliegenden Ruheposition (Fig. 1) in eine aufrechte Arbeitsposition (Fig. 9) verlagerbar ist, und wobei Formhaltemittel (17a, 17b, 17c, 17d, 17e, 17f, 17g, 17h, 18a, 18b, 18c, 18d) vorgesehen sind, mit denen jeweils ein Seitenwandabschnitt in seiner Arbeitsposition lösbar arretierbar ist.

2. Form zur Aufnahme von Lebensmitteln nach Anspruch 1, **dadurch gekennzeichnet, dass** die Matte (11) im Wesentlichen rechteckig ausgebildet ist.

3. Form zur Aufnahme von Lebensmitteln nach Anspruch 1 oder 2, **dadurch gekennzeichnet, dass** die Sollbiegebereiche (14a, 14b, 15a, 15b) durch Zonen mit Materialschwächungen erreicht sind.

4. Form zur Aufnahme von Lebensmitteln nach einem der vorangegangenen Ansprüche, **dadurch gekennzeichnet, dass** die Matte vier Seitenwandabschnitte (13a, 13c, 13k, 13f) aufweist, die in ihrer aufrechten Arbeitsposition zwei Längsseitenwände (34a, 34b) und zwei Querseitenwände (35a, 35b) ausbilden.

5. Form zur Aufnahme von Lebensmitteln nach einem der vorangegangenen Ansprüche, **dadurch gekennzeichnet, dass** die Matte in ihren äußeren Ecken Eckabschnitte (13d, 13c, 13i, 13j, 131, 13m, 13g, 13h) aufweist, die jeweils zwei Seitenwandabschnitte miteinander verbinden.

6. Form zur Aufnahme von Lebensmitteln nach Anspruch 5, **dadurch gekennzeichnet, dass** die Eckabschnitte (13d, 13c, 13i, 13j, 13l, 13m, 13g, 13h) Sollbiegebereiche (16a, 16b, 16c, 16d) aufweisen.

7. Form zur Aufnahme von Lebensmitteln nach einem der vorangegangenen Ansprüche, **dadurch gekennzeichnet, dass** die Formhaltemittel (17a, 17b, 17c, 17d, 17e, 17f, 17g, 17h, 18a, 18b, 18c, 18d) an der Matte befestigt sind.

8. Form zur Aufnahme von Lebensmitteln nach einem der vorangegangenen Ansprüche, **dadurch gekennzeichnet, dass** die Formhaltemittel (17a, 17b, 17c, 17d, 17e, 17f, 17g, 17h, 18a, 18b, 18c, 18d) jeweils einen Stecker oder Verriegelungsfortsatz (19) und eine Aufnahme oder mehrere Aufnahmen (17a, 17b, 17c, 17d, 17e, 17f, 17g, 17h, 20) aufweisen.

9. Form zur Aufnahme von Lebensmitteln nach einem der vorangegangenen Ansprüche, **dadurch gekennzeichnet, dass** die Matte im Bereich der Seitenwandabschnitte Versteifungselemente (23a, 23b, 23c, 23d) aufweist.

10. Form zur Aufnahme von Lebensmitteln nach Anspruch 1, **dadurch gekennzeichnet, dass** die Matte rechteckig ausgebildet ist, und dass im Bereich von zwei Seitenwandabschnitten (13f, 13k), die bei in Arbeitsposition befindlicher Form Längsseitenwände (34a, 34b) bereitstellen, Verstärkungseinlagen (23a, 23b) zur Erhöhung der Formsteifigkeit der Form im montierten Zustand angeordnet sind.

11. Form zur Aufnahme von Lebensmitteln nach Anspruch 10, **dadurch gekennzeichnet, dass** die Verstärkungseinlagen (23a, 23b) allseitig von Kunststoff oder Silikonmaterial umhüllt sind.

12. Form zur Aufnahme von Lebensmitteln nach Anspruch 10, **dadurch gekennzeichnet, dass** die Verstärkungseinlagen (23a, 23b) jeweils eine Länge (27) aufweisen, die der Länge des Seitenwandabschnittes (13f, 13k) entspricht, und eine Breite (26), die geringer ist als die Breite des Seitenwandabschnittes (13f, 13k).

13. Form zur Aufnahme von Lebensmitteln nach Anspruch 12, **dadurch gekennzeichnet, dass** die Verstärkungseinlagen (23a, 23b) jeweils an einem Randbereich des Seitenwandabschnittes (13f, 13k) angeordnet sind.

14. Form zur Aufnahme von Lebensmitteln nach einem der Ansprüche 10 bis 13, **dadurch gekennzeichnet, dass** zwischen jeweils einer Verstärkungseinlage (23a, 23b) und dem Bodenabschnitt (13b) ein Bereich des Seitenwandabschnittes (13f, 13k) von Verstärkungseinlagen (23a, 23b) frei gehalten ist.

15. Form zur Aufnahme von Lebensmitteln nach Anspruch 12 und nach Anspruch 14, **dadurch gekennzeichnet, dass** die Breite (26) der Verstärkungseinlage (23a, 23b) geringer ist als eine Breite des von Verstärkungseinlagen (23a, 23b) frei gehaltenen Bereiches des Seitenwandabschnittes (13f, 13k).
